# EUROPÄISCHE PATENTSCHRIFT

(11) **EP 3 012 504 B1**
(45) Veröffentlichungstag und Bekanntmachung des Hinweises auf die Patenterteilung: **09.05.2018**
(21) Anmeldenummer: 15188192.7
(22) Anmeldetag: 02.10.2015
(51) Int. Cl.: F16M 11/16, A47B 21/06, F16M 11/20, F16M 13/02

(54) **ADAPTER**
ADAPTER
ADAPTATEUR

(30) Priorität: 16.10.2014 DE 102014115098
(43) Veröffentlichungstag der Anmeldung: 27.04.2016
(73) Patentinhaber: "Durable" Hunke & Jochheim GmbH & Co. Kommanditgesellschaft, 58636 Iserlohn (DE)
(72) Erfinder: Maier-Hunke, Horst-Werner, 58640 Iserlohn (DE)
(74) Vertreter: Beckord & Niedlich Patentanwälte PartG mbB

(56) Entgegenhaltungen:
- DE-A1- 3 907 262
- US-A1- 2002 190 172
- US-A1- 2013 239 943

## Beschreibung

Die Erfindung betrifft einen Adapter zur Befestigung eines Objekts, vorzugsweise einer Tischleuchte, auf bzw. an einer Tischplatte sowie eine Tischleuchte mit einem solchen Adapter.

Viele an einem Schreibtisch zu montierende Objekte, insbesondere Schreibtischleuchten, aber auch Telefonschwenkarme, Monitore etc. weisen an einem unteren Ende ihres Gestells eine Kupplung auf, meist in Form eines Montagezapfens oder dergleichen, der zur Halterung in eine passende Aufnahmeöffnung eingesteckt werden kann. Auf diese Weise wird das jeweilige Objekt um eine Achse des Montagezapfens drehbar gehaltert. Zur Halterung von Leuchten werden in der Regel relativ schwere Platten zur Aufstellung auf einer Tischplatte verwendet, an denen obenseitig das Kupplungsteil, beispielsweise die Aufnahmeöffnung, angeordnet ist. Alternativ gibt es Halteklemmen, die an einer Oberseite eine entsprechende Aufnahme aufweisen und die auf eine Kante einer Tischplatte aufgeschoben werden, so dass der Rand der Tischplatte umgriffen wird.

Weiterhin ist aus der DE 20 2013 100 696 U1 ein Adapter bekannt, der als Einsatz für eine Kabeldurchführungsaussparung in einer Tischplatte ausgebildet ist. Dieser weist eine Abdeckung auf, die einen Rand der Aussparung oberhalb der Tischplatte überdeckt. In diesem Adapter befindet sich eine integrierte vertikale Zapfenaufnahme für den Montagezapfen am zu haltenden Objekt. Im Wesentlichen besteht dieser Adapter aus einem dosenartigen oberen Einsatzteil, dessen Kontur der Außenwände an die Aussparung in der Tischplatte angepasst ist, beispielsweise für einen Einsatz in eine typische Kabeldurchführungsbohrung der Tischplatte einen kreisförmigen Querschnitt aufweist. An diesem dosenförmigen Einsatzteil ist obenseitig der Rand angeordnet, um die Tischplatte rings um die Aussparung abzudecken. Die Wandungen dieses Einsatzteils erstrecken sich nach unten ganz durch die Tischplatte hindurch und weisen unten ein Außengewinde auf, auf welches ein speziell dem Außendurchmesser des Einsatzteils angepasster Klemmring aufgeschraubt wird. Die Zapfenaufnahme ist in diesem Einsatz mittels eines Spritzgussverfahrens in geeigneter Weise integriert. Ein ähnlicher Adapter wird auch in der DE 39 07 262 A1 gezeigt, wobei hier jedoch zur Klemmung ein durchgehender Zugbolzen und eine Gegendruckplatte dient.

Aufgrund des dosenartigen Einsatzteils, das genau an die Aussparung in der Tischplatte angepasst ist, müssen verschiedenen Tischen mit unterschiedlichen Aussparungen auch entsprechende Adapter zur Verfügung gestellt werden. Tauscht der Benutzer beispielsweise seinen Schreibtisch aus, möchte aber weiterhin seine Schreibtischleuchte im Tisch behalten, muss er ggf. einen neuen Adapter beschaffen, wenn die Maße der Aussparung im neuen Tisch nicht den Maßen der Aussparung im alten Tisch entsprechen. Zudem muss der Handel immer verschiedene Adaptertypen bereithalten.

In der FR 2 770 725 wird eine Schreibtischhalterung für einen Schwenkarm mit einem Monitor beschrieben. Der relativ schwere Monitor muss dabei auch in extreme Stellungen verschwenkt werden, so dass eine besonders stabile Halterung erforderlich ist. Diese Halterung nutzt ebenfalls eine Aussparung in der Tischplatte. Die Aussparung ist von einer Halteplatte abgedeckt. Diese Halteplatte wird zum einen von einer um die hintere Tischplattenkante unter die Tischplatte herumgreifenden Klemme mit zwei voneinander beanstandeten, von unten gegen die Tischplatte drückenden Klemmschrauben gehalten. Zum anderen wird die Halteplatte von einer Schraube gesichert, die durch die Aussparung hindurch von unten in die Halteplatte eingeschraubt ist. Diese Schraube verläuft an ihrem unteren Ende, d.h. unter der Tischplatte, durch einen Querbalken, der sich von unten quer über die Aussparung in der Tischplatte erstreckt, und drückt mit ihrem Schraubenkopf gegen den Querbalken, so dass die Schraube mit dem Querbalken eine Art T-förmige Sicherung bildet. Dadurch wird eine Dreipunkthalterung der Klemmplatte an der Tischplatte realisiert, wobei das durch die Haltepunkte definierte Dreieck relativ groß ist. Auf der Oberseite der Klemmplatte ist dann der Fuß des Monitorschwenkarms fest montiert. Diese Konstruktion ist zum einen äußerst aufwändig und zum anderen ebenfalls konstruktionsbedingt nur an Tischplatten mit bestimmten Abmaßen hinsichtlich der Tischplattendicke und der Position der Aussparung einsetzbar, ohne dass Komponenten mit angepassten Abmessungen beschafft werden.

Die US 2002/0190172 A1 zeigt ein flexibleres Montagesystem, welches aus einem Set von mehreren Komponenten besteht, die je nach zu montierendem Teil und dem Objekt, an dem die Montage erfolgen soll, ausgewählt und unterschiedlich zusammengeschraubt werden können. Für eine einfache Montage eines Teils an einer Tischplatte wird vorgeschlagen, auf der Oberseite der Tischplatte eine Hülse, welche zur Aufnahme eines Kupplungszapfens des zu montierenden Teils dient, mittels einer durch eine Bohrung der Tischplatte hindurchlaufenden Schraube zu befestigen, welche unter der Tischplatte mit einer Mutter und einer Art Unterlegscheibe fixiert wird. Die Bohrung durch die Tischplatte ist hierbei an den Außendurchmesser der Schraube angepasst.

Schließlich wird in der US 2013/0239943 A1 ein Befestigungssystem zur Halterung eines sogenannten Heizpilzes in einer Tischplatte eines Gartentisches oder dergleichen beschrieben. Hier erfolgt eine Befestigung des Heizpilzes an einem Adapterteil eines durch die Tischplatte verlaufenden Schraubbolzens. Oberhalb der Tischplatte befindet sich ein kragenartiger Andruckteller und unterhalb der Tischplatte wird auf den Schraubbolzen von unten ein Gegendruckteller geschraubt. Auch hier ist in den meisten Varianten das Loch in der Tischplatte an den Außendurchmesser des Schraubbolzens angepasst. Alternativ weist der Schraubbolzen oberhalb der Tischplatte einen sich konusförmig nach oben erweiternden Zentrierkragen auf, welcher für eine Selbstzentrierung des Schraubbolzens beim Einstecken in ein etwas größeres Loch in der Tischplatte sorgt. Um diesen Kragen nach oben zu verdecken, muss der Andruckteller entsprechend voluminöser ausgestaltet sein und unten eine Kavität für den Zentrierkragen aufweisen. Für eine Montage z. B. einer Schreibtischleuchte an einem Schreibtisch ist diese Konstruktion daher nicht geeignet.

Es ist eine Aufgabe der vorliegenden Erfindung, einen Adapter zur Verfügung zu stellen, welcher an unterschiedliche Aussparungen von Schreibtischen flexibler anpassbar ist. Diese Aufgabe wird durch einen Adapter gemäß Patentanspruch 1 gelöst.

Der erfindungsgemäße Adapter zur Befestigung eines Objekts auf der Tischplatte ist ebenfalls im Wesentlichen in Form eines Einsatzes für eine vertikale, vorzugsweise kreisförmige, Aussparung in der Tischplatte ausgebildet. Er weist zumindest folgende Komponenten auf:

Einen Verbindungsbolzen, der im bestimmungsgemäß montierten Zustand durch die Aussparung der Tischplatte verläuft. An einem oberen ersten Endabschnitt weist dieser Verbindungsbolzen ein Kupplungselement zur Kupplung mit dem zu befestigenden Objekt auf. Es wird an dieser Stelle darauf hingewiesen, dass die Positionsbezeichnungen "oben" und "unten" auf einen bestimmungsgemäß montierten Zustand des Adapters an einer Tischplatte bezogen sind, d. h. dass sich der "obere", erste Endabschnitt im montierten Zustand auf der Oberseite der Tischplatte befindet bzw. nach oben über die Tischplatte herausragt. Bei dem Kupplungselement handelt es sich vorzugsweise, wie später noch anhand von Beispielen erläutert wird, um einen Kupplungszapfen. Prinzipiell könnte es sich aber auch um ein anderes Kupplungselement handeln, beispielsweise eine Art sich nach oben erstreckender Zylinder, dessen Innenraum eine Kupplungszapfenaufnahme für einen Kupplungszapfen am Objekt bildet. In einem zweiten Abschnitt, der von dem Kupplungselement durch einen sich radial nach außen erstreckenden Kragen getrennt ist, und der sich entlang der Längsachse des Verbindungsbolzens bzw. des Kupplungselements weiter nach unten (durch die Tischplatte) erstreckt, weist der Verbindungsbolzen Befestigungsmittel zur Befestigung mit einer Klemmplatte auf. Der Kragen kann dabei eine beliebige Auskragung bzw. eine Art Flansch sein, und er weist in Richtung zum zweiten Abschnitt hin eine, vorzugsweise ringförmige, Andruckfläche auf, die im fest montierten Zustand des Adapters nach unten, in Richtung der Tischplatte, auf die Tischplatte selbst oder - wie später noch erläutert wird - auf eine optionale Deckplatte, eine Unterlegscheibe oder dergleichen drückt. Die Befestigungsmittel zur Befestigung der Klemmplatte am zweiten Abschnitt des Verbindungsbolzens können bevorzugt zumindest in einem zweiten Endabschnitt angeordnet sein, der dem ersten Endabschnitt bezüglich der Längsachse des Verbindungsbolzens gegenüberliegt.

Weiterhin weist der Adapter eine Klemmplatte mit Befestigungsmitteln zur Befestigung an dem zweiten Abschnitt des Verbindungsbolzens auf. Diese Befestigungsmittel sind entsprechend an die Befestigungsmittel am zweiten Abschnitt des Verbindungsbolzens angepasst und sie sind erfindungsgemäß so ausgebildet, dass die Befestigungsposition der Klemmplatte in Längsrichtung des Verbindungsbolzens verstellbar ist. Durch die Einstellung dieser Befestigungsposition der Klemmplatte kann im montierten Zustand dafür gesorgt werden, dass sie von unten fest gegen die Tischplatte drückt, so dass die Tischplatte zwischen der Klemmplatte und (wie erwähnt direkt oder indirekt) der Andruckfläche des Kragens des Verbindungsbolzens festgeklemmt wird. Diese Klemmplatte weist auf zumindest einer Oberfläche ein Zentrierelement auf, welches an einen Innendurchmesser der Aussparung einer Tischplatte angepasst ist.

Optional weist der Adapter zudem eine Deckplatte auf, die sich im bestimmungsgemäß montierten Zustand zwischen der Klemmplatte und dem Kragen befindet und die Aussparung der Tischplatte von oben abdeckt. Hierzu weist die Deckplatte selber eine Durchgangsöffnung auf, durch die sich im montierten Zustand der zweite Abschnitt des Verbindungsbolzens hindurch erstreckt.

Dieser Adapter bildet ein sehr flexibles System, das an unterschiedliche Aussparungen von Tischplatten anpassbar ist, insbesondere an verschiedene kreisförmige Aussparungen. Zur Befestigung eines Objekts an bzw. auf der Tischplatte mit dem erfindungsgemäßen Adapter muss lediglich der Verbindungsbolzen von oben durch die Aussparung hindurchgesteckt werden und von unten die Klemmplatte an dem Verbindungsbolzen in der passenden Höhe, d. h. in der richtigen Position in Längsrichtung des Verbindungsbolzens so befestigt werden, dass der Kragen am Verbindungsbolzen einerseits auf der Oberseite der Tischplatte und die Klemmplatte auf der unteren Seite dafür sorgen, dass der Verbindungsbolzen, der an seinem oberen Ende ja das Kupplungselement trägt, festgehalten wird.

Wenn der Benutzer beispielsweise keine große Aussparung in seiner Tischplatte wünscht, reicht eine einfache dünne Bohrung aus, die nur geringfügig größer ist als der Außendurchmesser des zweiten Abschnitts des Verbindungsbolzens, der durch die Tischaussparung der Tischplatte hindurchgesteckt werden muss. In diesem Fall kann der Benutzer beispielsweise vorher eine Unterlegscheibe von unten, d. h. vom freien Ende des zweiten Abschnitts aus, an dem auch die Klemmplatte später befestigt wird, auf den Verbindungsbolzen schieben, so dass die Andruckfläche des Kragens nicht direkt auf die Tischoberfläche um die Aussparung drückt, sondern die Last ein wenig verteilt ist.

Steht dagegen ohnehin eine größere Aussparung in der Tischplatte zur Verfügung, beispielsweise eine Standard-Kabeldurchführungsöffnung mit einem Außendurchmesser von 60 mm, 80 mm etc., so kann er zusätzlich die Deckplatte verwenden, die dann zunächst mit ihrer Durchgangsöffnung von unten über den zweiten Abschnitt des Klemmbolzens geschoben wird. Anschließend wird der Verbindungsbolzen von oben durch die Aussparung der Tischplatte eingeführt, wobei die Deckplatte die Randkante der Aussparung überdeckt, und untenseitig wird mit Hilfe der Befestigungsmittel wieder die Klemmplatte am zweiten Abschnitt des Verbindungsbolzens befestigt. Die Andruckfläche des Kragens wirkt also nun indirekt über die Deckplatte bzw. den Rand der Deckplatte auf die Oberseite der Tischplatte im Bereich um die Durchgangsöffnung. Durch das Zentrierelement der Klemmplatte kann dafür gesorgt werden, dass die Längsachse des Verbindungsbolzens möglichst entlang der zentralen Achse der Aussparung - d. h. beispielsweise bei einer kreisförmigen Aussparung koaxial zu dieser Aussparung - verläuft.

Der erfindungsgemäße Adapter kann somit in beliebige Aussparungen von Tischplatten eingesetzt werden, solange die Klemmplatte und die optionale Deckplatte einen Außendurchmesser aufweisen, der größer ist als der Durchmesser der Aussparung in der Tischplatte. Besonders bevorzugt haben die Klemmplatte und die optionale Deckplatte einen Außendurchmesser von mindestens 85 mm und ganz besonders bevorzugt mindestens 90 mm. Da bei den derzeitigen Kabeldurchführungslöchern das größte Standardmaß bei 80 mm liegt, ist ein solcher Adapter an allen derzeit üblichen Schreibtischen mit Standardaussparungen einsatzfähig.

Weitere besonders vorteilhafte Ausgestaltungen und Weiterbildungen der Erfindung ergeben sich aus den abhängigen Ansprüchen sowie der nachfolgenden Beschreibung, wobei die Patentansprüche einer bestimmten Kategorie auch gemäß den abhängigen Ansprüchen einer anderen Kategorie weitergebildet sein können und wobei Merkmale verschiedener Ausführungsbeispiele zu neuen Ausführungsbeispielen kombiniert werden können.

Zur verstellbaren Befestigung der Klemmplatte am zweiten Abschnitt des Verbindungsbolzens gibt es prinzipiell verschiedene Möglichkeiten für die Ausgestaltung der Verbindungsmittel, wie beispielsweise eine bajonettartige Verbindung, Klemmelemente, Rastelemente oder dergleichen. Bei einer besonders einfachen und daher bevorzugten Variante umfassen die Befestigungsmittel am Verbindungsbolzen ein Außengewinde und die Befestigungsmittel an der Klemmplatte ein Gewindeloch mit einem zum Außengewinde des Verbindungsbolzens passenden Innengewinde. Hiermit ist auf kostengünstige Weise eine stufenlose Einstellung der Befestigungsposition der Klemmplatte entlang der Längsachse des Verbindungsbolzens und folglich für nahezu jede Tischplatte eine sichere und feste Klemmung zu erreichen.

Prinzipiell kann der Verbindungsbolzen einteilig, beispielsweise aus Vollmetall oder aus einem (geeignet festen) Kunststoff, z. B. in einem Spritzgussverfahren oder dergleichen, hergestellt sein. Bei einer bevorzugten Variante ist der Verbindungsbolzen aber zumindest zweiteilig ausgebildet, wobei ein erstes Teil das Kupplungselement vorzugsweise mit dem sich radial nach außen erstreckenden Kragen umfasst und ein mit dem ersten Teil, vorzugsweise lösbar, verbundenes zweites Teil den zweiten Abschnitt umfasst. Die zweiteilige Variante bietet sich insbesondere an, wenn der Adapter aus hochwertigen Materialien wie beispielsweise Metall hergestellt werden soll. Besonders kostengünstig und daher bevorzugt ist eine Variante, bei der das zweite Teil einfach einen Gewindebolzen umfasst bzw. aus einem solchen besteht und das Kupplungselement, insbesondere der Kupplungszapfen, an seiner unteren Stirnseite, die der Kupplungsseite gegenüberliegt, an der das Objekt später angekoppelt wird und zum zweiten Teil hinweist, eine Gewindebohrung aufweist, in die der Gewindebolzen in den Kupplungszapfen von unten eingeschraubt wird.

Bevorzugt sind die Befestigungsmittel an der Klemmplatte, also beispielsweise das Gewindeloch, und/oder die Durchgangsöffnung in der optionalen Deckplatte so angeordnet, dass der Verbindungsbolzen zentral senkrecht zur Erstreckung der jeweiligen Platte durch die Klemmplatte und/oder die optionale Deckplatte verläuft. Mit anderen Worten, die Längsachse des Verbindungsbolzens verläuft bevorzugt entlang einer zentralen Achse zwischen Deckplatte und optionaler Klemmplatte. Sind die Klemmplatte und/oder die Deckplatte jeweils - wie in einer bevorzugten Variante - kreisförmig, ist dies auch gleichzeitig deren Symmetrieachse. Zudem verläuft dann vorzugsweise die Längsachse des Verbindungsbolzens auch (zumindest) im Wesentlichen entlang der zentralen Achse der Aussparung in der Tischplatte bzw. bei einer vorzugsweise kreisförmigen Aussparung entlang der Symmetrieachse der Aussparung.

Die Klemmplatte weist erfindungsgemäß wie erwähnt auf zumindest einer ihrer beiden Oberflächen (d. h. den gegenüberliegenden Flachseiten der Klemmplatte) zumindest ein Zentrierelement auf. Dieses Zentrierelement ist so ausgestaltet, dass es zumindest im montierten Zustand an einen Innendurchmesser der Aussparung einer Tischplatte angepasst ist. Beispielsweise kann die Klemmplatte auf der betreffenden Oberfläche mehrere solcher Zentrierelemente in Form von Raststiften, Rastfedern oder dergleichen aufweisen, welche beispielsweise in einem zum Innendurchmesser der Aussparung passenden Kreisumfang koaxial um die Symmetrieachse der Klemmplatte, beispielsweise um das Gewindeloch, angeordnet sind. Bei einer besonders bevorzugten einfachen Ausgestaltung ist die Klemmplatte so ausgebildet, dass sie als Zentrierelement eine, zumindest abschnittsweise, kreisförmig oder ringförmig umlaufende Erhebung auf der betreffenden Oberfläche als Zentrierkante aufweist. Der Außendurchmesser dieser zumindest abschnittsweise umlaufenden Zentrierkante ist an den Innendurchmesser der kreisförmigen Aussparung der Tischplatte angepasst. Zum Beispiel könnte eine ringförmige Wulst auf der Oberfläche angeordnet sein. Besonders bevorzugt ist jedoch eine vollflächige, dünne bzw. flache kreisförmige Erhebung, welche eine Art "Zentrierabschnitt" der Klemmplatte bildet, wobei die Randkante dieses Zentrierabschnitts, d. h. die hierdurch gebildete Schulter, als Zentrierkante wirkt.

Damit der Adapter möglichst universell einsetzbar sein soll, weist bei einer bevorzugten Weiterbildung die Klemmplatte auf zwei gegenüberliegenden Oberflächen entsprechende Zentrierelemente für Aussparungen mit unterschiedlichen Innendurchmessern auf. Bevorzugt sind die Zentrierelemente so ausgebildet und angeordnet, dass eine Anpassung an kreisförmige Aussparungen mit unterschiedlichen Standardinnendurchmessern möglich ist. Derzeitige Standardmaße für Kabeldurchführungsausführungen in Tischen sind 60 mm und 80 mm. Dementsprechend sind die Zentrierelemente auf den beiden Seiten der Klemmplatte angeordnet. Je nachdem, welche Standardbohrung der Tisch des Benutzers aufweist, kann er einfach durch Drehen der Klemmplatte, d. h. Festlegen, welche der beiden Oberflächen der Klemmplatte nach oben gegen die Tischfläche drückt, für eine Zentrierung mit Hilfe der passenden Zentrierelemente sorgen. In der einfachsten Variante befinden sich auf beiden Seiten der Klemmplatte Zentrierabschnitte, wobei diese Zentrierabschnitte so ausgebildet sind, dass besonders bevorzugt auf der einen Oberfläche der Außendurchmesser des Zentrierabschnitts an eine Bohrung von 60 mm und auf der anderen Oberfläche an eine Bohrung von 80 mm angepasst ist. Ein erfindungsgemäßer Adapter kann auch als Set mit mehreren alternativ nutzbaren Klemmplatten mit unterschiedlichsten Zentrierelementen angeboten werden. Da die Klemmplatte im bestimmungsgemäß montierten Zustand unter dem Tisch angeordnet und daher normalerweise im normalen Sichtbereich verdeckt ist, kann sie ohnehin aus einem kostengünstigeren Material, wie beispielsweise Hartkunststoff, hergestellt sein.

Aufgrund der erfindungsgemäßen Konstruktion, welche anders als der Stand der Technik kein einzubauendes dosenartiges Einbauelement vorsieht, sondern lediglich einen durch die Aussparung hindurchlaufenden Verbindungsbolzen, ist bei einer üblichen größeren Bohrung noch relativ viel Platz innerhalb der Aussparung der Tischplatte. Daher kann bei einer besonders bevorzugten Variante der Adapter auch so ausgebildet sein, dass er zusätzlich als Kabeldurchführung dient. Hierzu weisen die Klemmplatte und/oder die optionale Deckplatte jeweils Aussparungen auf, die als Kabeldurchführungsöffnungen dienen. Diese Aussparungen liegen an einer Position, die neben den Befestigungsmitteln bzw. der Durchgangsöffnung für den Verbindungsbolzen liegt.

Bei einer bevorzugten Ausgestaltung weist die Aussparung in der Klemmplatte einen sich radial vom äußeren Rand in Richtung zur Mitte der Klemmplatte erstreckenden Schlitz auf. In der Deckplatte ist die Aussparung besonders bevorzugt so ausgestaltet, dass sie eine Nut umfasst, die sich nur auf einer Oberfläche bzw. Flachseite der Deckplatte erstreckt, und zwar auf der im bestimmungsgemäß montierten Zustand zur Klemmplatte weisenden Seite der Deckplatte. Die Deckplatte muss dementsprechend eine Dicke aufweisen, dass die Nut tief genug ausgebildet sein kann, um ein Kabel hindurchzuführen. Auch diese Nut läuft bevorzugt radial vom äußeren Rand in Richtung zur Mitte der Deckplatte. Das Kabel kann beispielsweise von unten durch den radial verlaufenden Schlitz durch die Klemmplatte und weiter durch die Aussparung geführt werden. Obenseitig wird das Kabel durch die radiale Nut (verdeckt) in der Deckplatte geführt und kommt schließlich aus der Nutöffnung an einem seitlichen Rand aus der Deckplatte heraus.

Bei einer alternativen Variante ist die Deckplatte zweiteilig ausgebildet, d. h. sie besteht beispielsweise aus einer unteren Platte mit einer Aussparung für die Kabeldurchführung, z. B. einem von außen radial nach innen verlaufenden Schlitz wie in der Klemmplatte, und einer darüber befindlichen Abdeckung.

Wie bereits oben erwähnt, ist das Kupplungselement besonders bevorzugt ein Kupplungszapfen. Dieses Kupplungselement ist besonders bevorzugt so ausgebildet, dass es ein Rastelement aufweist. Ganz besonders bevorzugt kann es sich bei einem solchen Rastelement um eine Rastkerbe handeln. Dieses Rastelement bzw. die Rastkerbe ist so ausgebildet und angeordnet, dass es mit einem Rastelement in dem entsprechenden Gegenkupplungsteil des zu kuppelnden Objekts zusammenwirkt. Ein solches Rastelement bzw. die zusammenwirkenden Rastelemente sollen dafür sorgen, dass ein Abkuppeln des Objekts vom Kupplungselement nur gegen einen (vorzugsweise kleinen) mechanischen Widerstand möglich ist, um das Objekt sicherer am Kupplungselement zu kuppeln. Das Kupplungselement und das Gegenkupplungsteil des zu kuppelnden Objekts können auch jeweils mehrere solcher Rastelemente aufweisen.

Bei einer besonders bevorzugten Variante, bei der das Kupplungselement als Kupplungszapfen ausgebildet ist, weist dieser Kupplungszapfen zumindest zwei Rastkerben auf, die an zwei sich gegenüberliegenden Seiten in einer Mantelfläche des Kupplungszapfens angeordnet sind. Im Übrigen ist dieser Kupplungszapfen bevorzugt zylindersymmetrisch ausgebildet. Diese Rastkerben können so angeordnet sein, dass der Benutzer beispielsweise eine Kupplungshülse oder dergleichen, welche auf den Kupplungszapfen aufgesteckt wird, in eine bestimmte Position drehen kann, in der die entsprechenden Rastelemente des Gegenkupplungsteils, welche in die Rastkerben eingreifen, nicht mehr in den Rastkerben eingerastet sind, sondern vor der zylindrischen Mantelfläche liegen. In dieser Position ist dann eine einfache Entkupplung möglich, wogegen in Positionen, in denen die Rastelemente der Kupplungshülse des Objekts in die Rastkerben eingreifen, keine Entkupplung möglich ist.

Mit Hilfe eines solchen Adapters können wie erwähnt beliebige Objekte, die ein entsprechendes Gegenkupplungselement aufweisen, am Tisch befestigt werden, beispielsweise Schwenkarme für Telefone, Displays oder dergleichen. Besonders bevorzugt wird ein solcher Adapter aber zur Montage einer Tischleuchte bzw. Schreibtischleuchte verwendet, so dass die Erfindung auch eine entsprechende Tischleuchte mit einem solchen Adapter umfasst.

Die Erfindung wird im Folgenden unter Hinweis auf die beigefügten Figuren anhand eines Ausführungsbeispiels noch einmal näher erläutert. Dabei sind in den verschiedenen Figuren gleiche oder ähnliche Komponenten mit identischen Bezugsziffern versehen. Es zeigen:
Figur 1 eine schematische perspektivische Ansicht von oben auf einen Adapter gemäß einem Ausführungsbeispiel der Erfindung in einer ersten Einsatzoption mit einer oberen Deckplatte,
Figur 2 eine schematische perspektivische Ansicht von unten auf den Adapter gemäß Figur 1 in der ersten Einsatzoption mit der oberen Deckplatte,
Figur 3 einen schematischen Längsschnitt durch eine Tischplatte, in welche in einer Aussparung ein Adapter in der ersten Einsatzoption mit der oberen Deckplatte montiert ist, gemäß den Figuren 1 und 2,
Figur 4 eine schematische perspektivische Ansicht von oben auf den Adapter in einer zweiten Einsatzoption ohne obere Deckplatte,
Figur 5 einen schematischen Längsschnitt durch eine Tischplatte, in welche in einer Aussparung der Adapter in der zweiten Einsatzoption gemäß Figuren 4 ohne obere Deckplatte montiert ist,
Figur 6 eine schematische Darstellung einer mittels des Adapters auf einer Tischoberfläche montierten Schreibtischleuchte.

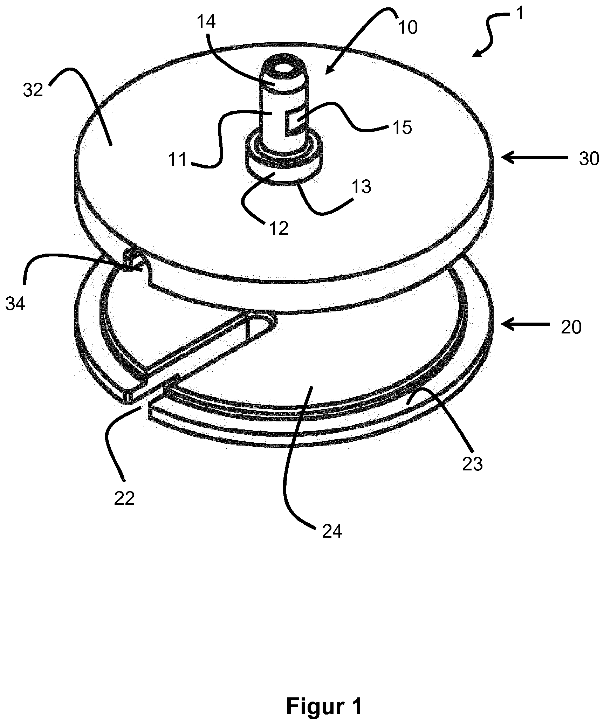

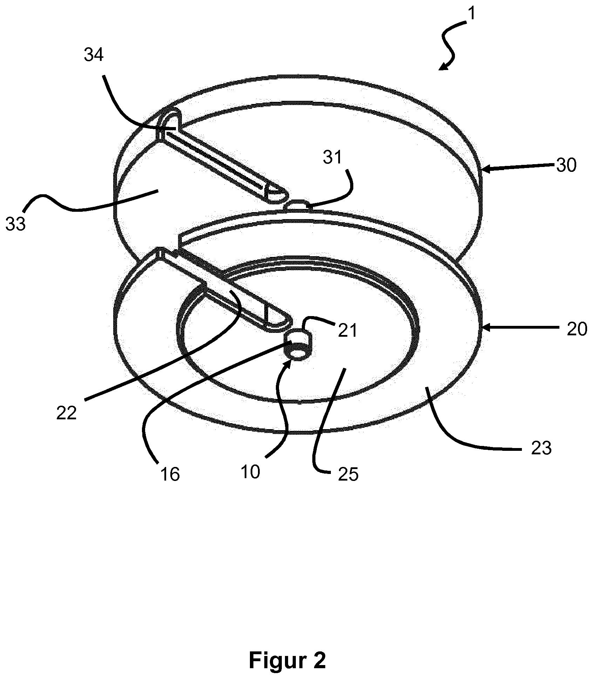

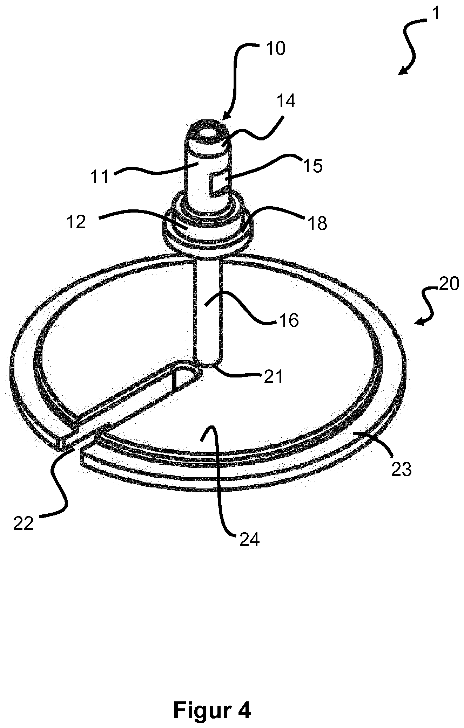

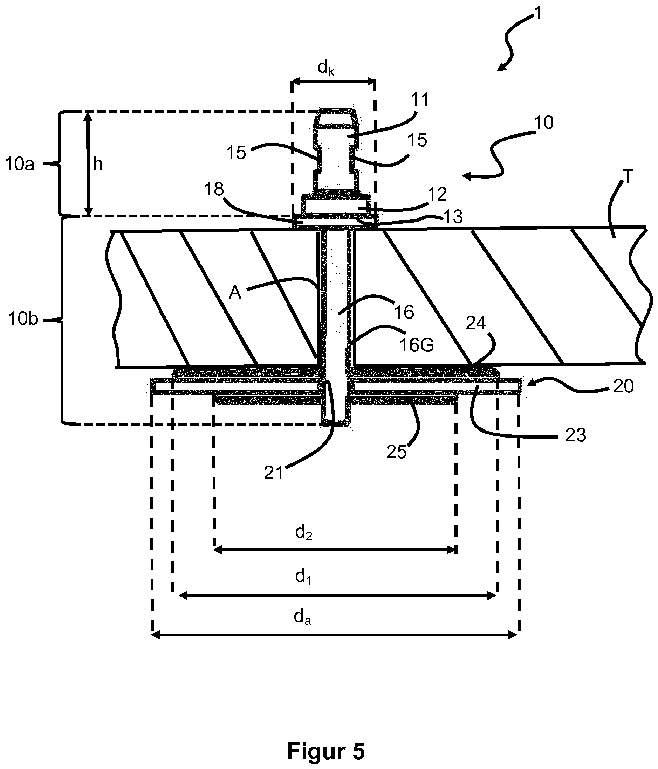

Die Figuren 1 bis 5 zeigen alle dasselbe Ausführungsbeispiel für einen erfindungsgemäßen Adapter 1, welcher eine optional einsetzbare Deckplatte umfasst. Dabei zeigen die Figuren 1 bis 3 jeweils den Adapter 1 mit der optionalen Deckplatte 30 aus perspektivischen Ansichten sowie im Einsatz innerhalb einer Aussparung A einer Tischplatte T und die Figuren 4 und 5 jeweils eine perspektivische Ansicht des Adapters in der zweiten Einsatzoption ohne obere Deckplatte perspektivisch von oben und im Einsatz in der Aussparung A einer Tischplatte T.

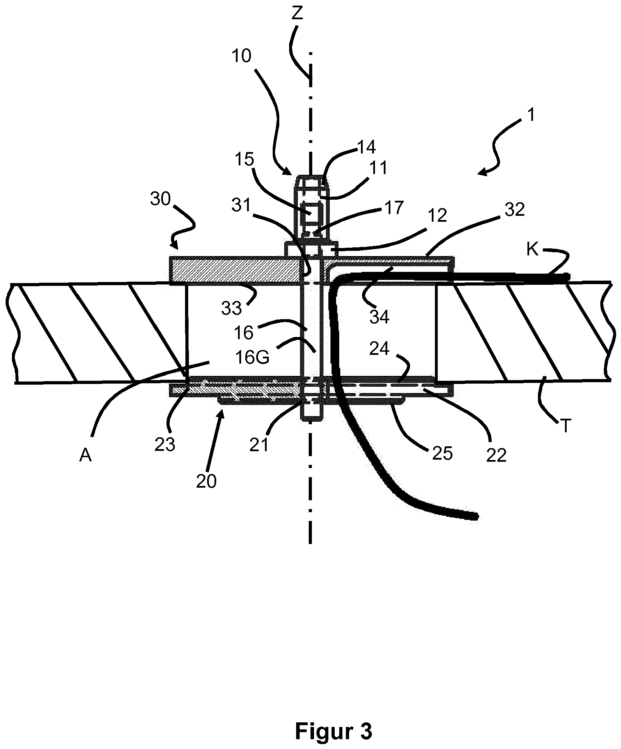

Ein Kernteil des erfindungsgemäßen Adapters 1 ist ein Verbindungsbolzen 10, der sich jeweils, wie in den Figuren 3 und 5 gezeigt ist, von oben nach unten durch eine Aussparung A einer Tischplatte T erstreckt. Im vorliegenden Ausführungsbeispiel handelt es sich um einen Adapter 1 für bevorzugt kreisförmige Aussparungen A in Tischplatten T, weshalb auch die Klemmplatte 20 und die Deckplatte 30 kreisförmig ausgebildet sind. Die Längsachse Z des Verbindungsbolzens 10 verläuft hier auch entlang der Symmetrieachse der kreisförmigen Deckplatte 30 und der kreisförmigen Klemmplatte 20. Der Verbindungsbolzen 10 verläuft dementsprechend im Wesentlichen koaxial zur kreisförmigen Aussparung A der Tischplatte T. Die Erfindung ist aber nicht auf solche kreisförmigen Ausgestaltungen beschränkt, sondern prinzipiell könnte das gleiche Prinzip auch an rechteckigen oder in beliebiger Weise geformten Aussparungen eingesetzt werden, und auch die Deckplatte und die Klemmplatte könnten beliebige Außenkonturen aufweisen.

Der Verbindungsbolzen 10 weist einen oberen, sich nach oben über die Tischplatte T hinaus erstreckenden Abschnitt 10a, den ersten Endabschnitt (siehe Figur 5) auf. Die Höhe h dieses Endabschnitts 10a beträgt hier vorzugsweise 26 mm. Dieser Endabschnitt weist ein Kupplungselement 11 in Form eines Kupplungszapfens 11 auf. Am Kupplungselement 11 ist untenseitig ein Kragen 12 bzw. Flansch mit einer nach unten weisenden Andruckfläche 13 bzw. Flanschfläche angeordnet. Dieser Kupplungszapfen 11 ist zylinderförmig ausgebildet, weist jedoch in seiner Mantelfläche an zwei gegenüberliegenden Seiten jeweils Rastkerben 15 auf, in welche Rastelemente, die in einer Kupplungshülse des daran zu kuppelnden Objekts, d. h. der Schreibtischleuchte 100, angeordnet sind (nicht dargestellt).

Die Kupplungshülse ist auf dem Kupplungszapfen 11 frei um die Längsachse Z des Verbindungsbolzens 10 drehbar, so dass entsprechend die Schreibtischleuchte 100 in eine beliebige Position geschwenkt werden kann. Die Rastelemente im Inneren der Kupplungshülse sind so ausgebildet, dass sie in den meisten Positionen in die Rastkerben 15 am Kupplungszapfen 11 eingreifen und lediglich in einer bestimmten Position nicht in den Rastkerben 15 rasten. In dieser Position kann dann der Benutzer relativ einfach die Leuchte 100 mit der Kupplungshülse von oben vom Kupplungszapfen 11 abziehen. Um ein einfaches Aufstecken der Kupplungshülse auf den Kupplungszapfen 11 zu erleichtern, weist der Kupplungszapfen 11 an seiner oberen Stirnseite bzw. an der umlaufenden Randkante der Stirnseite eine Fase 14 auf.

Wie aus Figur 3 zu ersehen ist, ist der Verbindungsbolzen 10 zweiteilig ausgebildet, nämlich aus einem oberen Teil, das hier aus dem Kupplungszapfen 11 und dem Kragen 12 besteht, sowie einem Gewindebolzen 16, welcher einfach von unten in ein Gewindeloch 17 in der Stirnseite des oberen Teils, an der sich der Kragen 12 befindet, eingeschraubt ist. Der nicht im Gewindeloch 17 eingeschraubte freie Abschnitt der Gewindestange 16 bildet den zweiten Abschnitt 10b des Verbindungsbolzens 10, der nach unten durch die Aussparung der Tischplatte T hindurchragt. Die Gewindestange hat beispielsweise ein Außengewinde von 6 mm, bzw. es handelt sich bevorzugt um eine M 6 Gewindestange.

Das Außengewinde 16G der Gewindestange 16 bildet hier ein Verbindungsmittel zur Befestigung der unteren Klemmplatte 20 am Verbindungsbolzen 10. Diese Klemmplatte 20 weist hierzu ein zentrales Gewindeloch 21 auf, dessen Innengewinde an das Außengewinde 16 G der Gewindestange 16 angepasst ist. Die Klemmplatte 20 wird einfach von unten zur Montage des Verbindungsbolzens 10 in der Aussparung A auf den Gewindebolzen 16 aufgeschraubt und gegen den unteren Rand um die Aussparung A der Tischplatte T gedrückt. Die Klemmplatte 20 weist hierzu einen Außendurchmesser dₐ auf, der größer als 80 mm ist, hier beispielsweise 90 mm, so dass er auch 80 mm-Löcher in Tischplatten großzügig abdecken kann.

Diese Klemmplatte 20 weist für den Einsatz als Kabeldurchführung einen Schlitz 22 auf, der sich von einer äußeren Randkante der Klemmplatte 20 radial nach innen bis kurz vor das Gewindeloch 21 erstreckt.

Die Klemmplatte 20 weist jeweils auf ihrer Oberseite und Unterseite eine umlaufende Schulter auf, d. h. die Klemmplatte 20 ist so geformt, dass sie auf beiden Flachseiten eines mittleren, dünnen Abschnitts 23, welcher den Außendurchmesser dₐ aufweist, um das Loch in der Tischplatte abzudecken, jeweils eine sich koaxial um die Symmetrieachse erstreckende flache kreisförmige Erhöhung als Zentrierabschnitte 24, 25 (oder "Zentrierflächen") bzw. Zentrierelemente 24, 25 aufweist. Diese Zentrierabschnitte 24, 25 bilden an ihren Außenkanten die Schultern. Hierzu sind die Außenkanten vorzugsweise angefast, wodurch eine leichte Zentrierung in entsprechenden Bohrungen in der Tischoberfläche möglich ist.

Die Zentrierabschnitte 24, 25 sollten den passenden Durchmesser zur Bohrung in der Tischplatte T aufweisen. In dem bevorzugten Ausführungsbeispiel befindet sich auf der einen Seite der Klemmplatte 20 eine Zentrierfläche 24 mit einem Durchmesser d₁, welcher an ein 80 mm-Loch in der Tischplatte T angepasst ist. Auf der anderen Seite ist der Durchmesser d₂ der Zentrierfläche 25 so gewählt, dass die Zentrierfläche 25 sich passig in ein 60 mm-Loch einsetzen lässt. Da die Klemmplatte wahlweise mit der einen oder der anderen Oberfläche nach oben auf den Gewindebolzen 16 des Verbindungsbolzens 10 aufschraubbar ist, kann so eine leichte Anpassung an zwei verschiedene Tischdurchmesser erfolgen. In dem in Figur 3 dargestellten Ausführungsbeispiel handelt es sich um eine Aussparung A in Form eines 80 mm-Durchmesser-Standardlochs.

Sofern der Adapter 1 in einem solchen relativ großen Loch in der Tischplatte montiert werden soll, wird in der erfindungsgemäßen Weise die Deckplatte 30 verwendet. Diese Deckplatte 30 wird vor der Montage von unten über den Gewindebolzen 16 geschoben. Hierzu weist die Deckplatte 30 eine zentrale Durchgangsöffnung 31 bzw. Durchgangsbohrung 31 auf, deren Innendurchmesser an den Außendurchmesser der Gewindestange 16 angepasst ist, so dass ein passiger Sitz gewährleistet ist. Im montierten Zustand drückt dann die ringförmige Andruckfläche 13 des Kragens 12 des ersten Endabschnitts 10a des Verbindungsbolzens 10 auf diese Deckplatte 30. Die Deckplatte 30 weist einen Außendurchmesser auf, der wiederum größer ist als das normalerweise größtmögliche Loch in der Tischplatte T. Vorzugsweise entspricht der Außendurchmesser der Deckplatte 30 genau dem Außendurchmesser des mittleren Abschnitts 23 der Klemmplatte 20. Das heißt, er beträgt beispielsweise auch 90 mm.

Die Deckplatte 30 weist an ihrer zur Klemmplatte 20 weisenden Unterseite 33, d. h. nach unten hin, eine Nut 34 auf, welche sich wie der Schlitz 22 in der Klemmplatte 20 radial von einer äußeren umlaufenden Kante nach innen bis kurz vor die Durchgangsbohrung 31 im Zentrum der Deckplatte 30 erstreckt. Diese Nut 34 ist nur von unten sichtbar bzw. an einer Stelle der Randkante, an der die Nut 34 von der Außenkante aus radial nach innen verläuft. Auf der Oberseite 32 ist die Deckplatte 30 glatt.

Wie aus der Darstellung des Adapters 1 mit der Deckplatte 30 in Figur 3 erkennbar ist, wird bei einem Aufschrauben der Klemmplatte 20 von unten auf den Gewindebolzen 16 mit Hilfe der Zentrierfläche 24 dafür gesorgt, dass die Klemmplatte 20 mit ihrem äußeren Rand umlaufend (bis auf den Schlitz 22) passend zum Liegen kommt, dementsprechend der Verbindungsbolzen 10 koaxial in der Bohrung durch die Tischplatte T zentriert wird und infolgedessen die Deckplatte 30 auf der Oberseite der Tischplatte T mit ihrem äußeren Rand umlaufend (bis auf eine Nut 34) passend auf dem Rand der Aussparung A aufliegt. Somit wird die Tischplatte T zwischen der Deckplatte 30 oben und der Klemmplatte 20 unten eingeklemmt und so der Adapter 1 in der Aussparung A sicher verklemmt bzw. positioniert.

In Figur 3 ist dargestellt, wie der Schlitz 22 in der Klemmplatte und die Nut 34 in der Unterseite 33 der Deckplatte 30 dazu genutzt werden können, um ein Kabel K durch die Aussparung A in der Tischplatte T hindurchzuführen. Das Kabel K muss lediglich durch den Schlitz 22 und obenseitig durch die Nut 34 hindurchgeführt werden. Das Kabel K ist dabei von der Deckplatte 30 abgedeckt und kommt erst an einer Randkante aus der Nut 34 heraus und kann dann beispielsweise zu einem Elektronikteil der Leuchte führen. Natürlich kann alternativ zum Kabel für die Leuchte auch ein beliebiges anderes Kabel, beispielsweise ein Telefonkabel etc., durch den Adapter hindurchgeführt werden Es wird darauf hingewiesen, dass prinzipiell der Schlitz 22 und die Nut 34 auch so ausgestaltet werden können, dass noch weitere Kabel hindurchgeführt werden können. Ebenso wäre es möglich, mehrere Schlitze 22 in der Klemmplatte und entsprechende Nuten 34 in der Deckplatte 30 vorzusehen, um mehrere Kabel hindurchzuführen.

Einige Benutzer möchten möglichst eine weitgehend freie Tischfläche haben und wünschen - beispielsweise aus Designgründen oder um den Tisch möglichst wenig zu verändern - keine große Aussparung A in der Tischplatte T. In diesem Fall kann der erfindungsgemäße Adapter ebenfalls eingesetzt werden, wobei wahlweise die Deckplatte 30 benutzt werden kann oder auch nicht.

Eine Verwendung ohne die Deckplatte 30 ist in den Figuren 4 und 5 gezeigt, wobei hier anstelle der Deckplatte 30 auf den Gewindebolzen 16 von unten (optional) eine Unterlegscheibe 18 aufgeschoben wurde, um die Kraft der Andruckfläche 13 des Kragens 12 auf die Oberfläche der Tischplatte T etwas mehr zu verteilen. Diese Unterlegscheibe 18 weist beispielsweise einen Durchmesser dₖ von 20 mm auf, wogegen der Durchmesser des Kragens 12 nur 16 mm beträgt.

Wie aus Figur 5 zu erkennen ist, reicht eine Aussparung A in Form einer dünnen Durchgangsbohrung aus, deren Durchmesser gerade so gewählt ist, dass die Gewindestange 16 passig eingesetzt werden kann (in Figur 5 ist die Durchgangsbohrung der besseren Erkennbarkeit wegen ein wenig größer dargestellt). Die Klemmplatte 20 wird dann in gleicher Weise wie bei der Verwendung mit der Deckplatte 30 von unten auf das Außengewinde 16G der Gewindestange 16 aufgeschraubt und drückt dann mit einer beliebigen Oberfläche eines der Zentrierabschnitte 24, 25 gegen die Tischfläche. Bei diesem Einsatz zeigt sich ein Vorteil der Zentrierabschnitte 24, 25 in Form von vollflächigen Erhebungen (im Gegensatz zu anderen Zentrierelementen), da so der Druck von unten auf die Tischplatte T gut verteilt ist und keine Abdrücke in der Tischplatte T entstehen. Auch hier erfolgt also eine sichere Klemmung des Adapters 1 in der Aussparung A der Tischplatte, wobei auf der Tischplatte dann nur noch der Kupplungszapfen 11 mit dem Kragen 12 und der Unterlegscheibe 18 zu sehen ist. Sofern der Fuß des zu montierenden Objekts mit einer Kupplungshülse ausgestaltet ist, welche nicht nur den Kupplungszapfen 11 umgreift, sondern auch den Kragen 12 und die optionale Unterlegscheibe 18 mit abdeckt, wird ein besonders schönes Design erreicht, da es dann so aussieht, als wenn das zu befestigende Objekt, beispielsweise die Schreibtischleuchte, lediglich mit einem dünnen Fuß aus der Tischoberfläche "herauswächst".

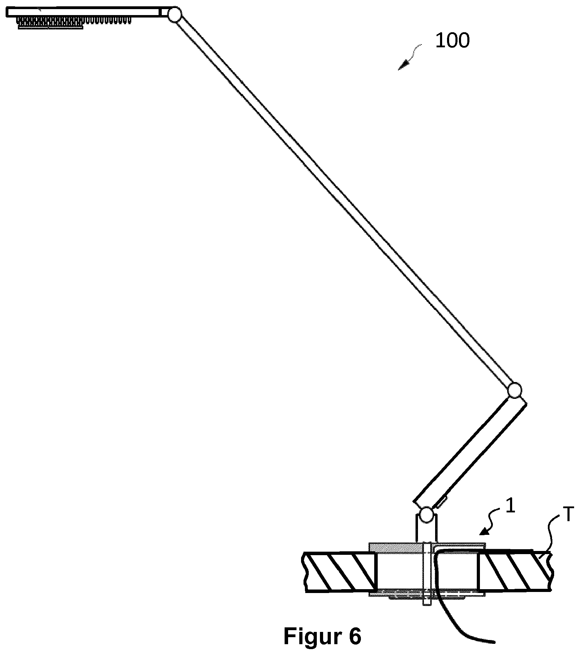

Figur 6 zeigt schließlich einen Einsatz dieses Adapters 1 zur Befestigung einer Schreibtischleuchte 100 auf einer Tischoberfläche, wobei hier der Adapter 1 in der ersten Einsatzoption in der Tischplatte T eingesetzt wurde. Das hindurchgeführte Kabel K kann dann z. B. an die Leuchte 100 angeschlossen sein (nicht dargestellt).

Wie an dem vorliegenden Ausführungsbeispiel gezeigt wurde, ist der erfindungsgemäße Adapter in vielfältiger Weise einsetzbar. Es ist nicht erforderlich, speziell an die unterschiedlichen Aussparungen in Tischplatten angepasste Adapter zu verwenden. Auch die Dicke der Tischplatte ist bei der erfindungsgemäßen Konstruktion unerheblich. In der Regel reicht die vorgesehene Gewindestange mit einer Länge von 80 mm aus. Für besonders dicke Tische kann die Gewindestange aber auch problemlos und kostengünstig gegen eine längere Gewindestange ausgetauscht werden.

Es wird abschließend noch einmal darauf hingewiesen, dass es sich bei der vorhergehend detailliert beschriebenen Vorrichtung lediglich um ein Ausführungsbeispiel handelt, welches vom Fachmann in verschiedenster Weise modifiziert werden kann, ohne den Bereich der Erfindung zu verlassen. Weiterhin schließt die Verwendung der unbestimmten Artikel "ein" bzw. "eine" nicht aus, dass die betreffenden Merkmale auch mehrfach vorhanden sein können.

## Patentansprüche

1. Adapter (1) in Form eines Einsatzes für eine vertikale Aussparung (A) einer Tischplatte (T) zur Befestigung eines Objekts (100), vorzugsweise einer Tischleuchte (100), welcher Adapter (1) zumindest folgende Komponenten aufweist:
- einen Verbindungsbolzen (10), der dazu bestimmt ist, im montierten Zustand durch die Aussparung (A) der Tischplatte (T) zu verlaufen,
welcher an einem ersten Endabschnitt (10a) ein Kupplungselement (11), vorzugsweise einen Kupplungszapfen (11), zur Kupplung mit dem zu befestigenden Objekt (100) aufweist,
und welcher in einem zweiten Abschnitt (10b), der von dem Kupplungselement (11) durch einen sich radial nach außen erstreckenden Kragen (12) mit einer in Richtung zum zweiten Abschnitt (10b) weisenden Andruckfläche (13) getrennt ist, Befestigungsmittel (16G) zur Befestigung mit einer Klemmplatte (20) aufweist,
- eine Klemmplatte (20) mit Befestigungsmitteln (21) zur in einer Längsrichtung des Verbindungsbolzen (10) verstellbaren Befestigung an dem zweiten Abschnitt (10b) des Verbindungsbolzens (10),
- optional eine zwischen der Klemmplatte (20) und dem Kragen (12) angeordnete Deckplatte (30), mit einer Durchgangsöffnung (31), durch welche sich der zweite Abschnitt (10b) des Verbindungsbolzens (10) hindurch erstreckt,
**dadurch gekennzeichnet, dass** die Klemmplatte (20) auf zumindest einer Oberfläche der Klemmplatte (20) ein Zentrierelement (24, 25) aufweist, welches an einen Innendurchmesser der Aussparung (A) einer Tischplatte (T) angepasst ist.

2. Adapter (1) nach Anspruch 1, wobei die Befestigungsmittel (16G) am Verbindungsbolzen (10) ein Außengewinde (16G) und die Befestigungsmittel (21) an der Klemmplatte (20) ein Gewindeloch (21) mit einem zum Außengewinde (16G) des Verbindungsbolzens (10) passenden Innengewinde umfassen.

3. Adapter (1) nach einem der vorstehenden Ansprüche, wobei der Verbindungsbolzen (10) zumindest zweiteilig ausgebildet ist, wobei ein erstes Teil das Kupplungselement (11), vorzugsweise mit dem sich radial nach außen erstreckenden Kragen (12), umfasst, und ein mit dem ersten Teil verbundenes zweites Teil den zweiten Abschnitt (10b) umfasst.

4. Adapter (1) nach einem der vorstehenden Ansprüche, wobei die Befestigungsmittel (21) an der Klemmplatte (20) und/oder die Durchgangsöffnung (31) in der optionalen Deckplatte (30) so angeordnet sind, dass der Verbindungsbolzen (10) zentral an der Klemmplatte (20) und/oder der optionalen Deckplatte (30) angeordnet ist.

5. Adapter (1) nach einem der vorstehenden Ansprüche, wobei die Klemmplatte (20) auf zwei gegenüberliegenden Oberflächen Zentrierelemente (24, 25) für Aussparungen (A) mit unterschiedlichen Innendurchmessern aufweist.

6. Adapter (1) nach einem der vorstehenden Ansprüche, wobei die Klemmplatte (20) und/oder die optionale Deckplatte (30) jeweils Aussparungen (22, 34) an einer Position aufweisen, die neben den Befestigungsmitteln (21) bzw. der Durchgangsöffnung (31) für den Verbindungsbolzen (10) liegen.

7. Adapter (1) nach Anspruch 6, wobei eine Aussparung (22) in der Klemmplatte (20) einen sich radial vom äußeren Rand in Richtung zur Mitte der Klemmplatte (20) erstreckenden Schlitz (22) umfasst.

8. Adapter (1) nach Anspruch 6 oder 7, wobei eine Aussparung (34) in der Deckplatte (30) eine sich auf einer im bestimmungsgemäß montierten Zustand zur Klemmplatte (20) weisenden Seite der Deckplatte (30) radial vom äußeren Rand in Richtung zur Mitte der Deckplatte (30) erstreckende Nut (34) umfasst.

9. Adapter (1) nach einem der vorstehenden Ansprüche, wobei das Kupplungselement (11), vorzugsweise der Kupplungszapfen (11), ein Rastelement (15), bevorzugt eine Rastkerbe (15) aufweist.

10. Adapter (1) nach Anspruch 9, wobei zwei Rastkerben (15) an zwei sich gegenüberliegenden Seiten in einer Mantelfläche des Kupplungszapfens (11) angeordnet sind.

11. Tischleuchte (100) mit einem Adapter (1) nach einem der vorhergehenden Ansprüche.

12. Verwendung eines Adapters (1) nach einem der Ansprüche 1 bis 10 zur Befestigung eines Objekts (100), vorzugsweise einer Tischleuchte (100), in einer vertikalen Aussparung (A) einer Tischplatte (T) .

## Claims

1. An adapter (1) in the form of an insert for a vertical recess (A) of a table top (T) for fastening an object (100), preferably a table lamp (100), which adapter (1) comprises at least the following components:
- a connecting bolt (10) which is designed to pass in the mounted state through the recess (A) of the table top (T),
which on a first end portion (10a) comprises a coupling element (11), preferably a coupling pin (11), for coupling to the object (100) to be fastened,
and which in a second portion (10b), which is separated from the coupling element (11) by a collar (12) which extends radially outwardly and which has a contact pressure surface (13) facing in the direction of the second portion (10b), comprises fastening means (16G) for fastening to a clamping plate (20),
- a clamping plate (20) having fastening means (21) for the adjustable fastening to the second portion (10b) of the connecting bolt (10) in a longitudinal direction of the connecting bolt (10),
- optionally a cover plate (30) arranged between the clamping plate (20) and the collar (12), said cover plate having a through-opening (31), the second portion (10b) of the connecting bolt (10) extending through said through-opening,
**characterised in that** the clamping plate (20) on at least one surface of the clamping plate (20) comprises a centring element (24, 25) which is adapted to an internal diameter of the recess (A) of a table top (T).

2. The adapter (1) according to claim 1, wherein the fastening means (16G) on the connecting bolt (10) comprises an external thread (16G) and the fastening means (21) on the clamping plate (20) comprises a threaded hole (21) having an internal thread adapted to the external thread (16G) of the connecting bolt (10).

3. The adapter (1) according to one of the preceding claims, wherein the connecting bolt (10) is configured at least in two parts, wherein a first part comprises the coupling element (11), preferably with the collar (12) extending radially outwardly, and a second part connected to the first part comprises the second portion (10b).

4. The adapter (1) according to one of the preceding claims, wherein the fastening means (21) are arranged on the clamping plate (20) and/or the through-opening (31) is arranged in the optional cover plate (30) such that the connecting bolt (10) is arranged centrally on the clamping plate (20) and/or the optional cover plate (30).

5. The adapter (1) according to one of the preceding claims, wherein the clamping plate (20) comprises centring elements (24, 25) on two opposing surfaces for recesses (A) having different internal diameters.

6. The adapter (1) according to one of the preceding claims, wherein the clamping plate (20) and/or the optional cover plate (30) in each case comprise recesses (22, 34) at a position which is located adjacent to the fastening means (21) and/or the through-opening (31) for the connecting bolt (10).

7. The adapter (1) according to claim 6, wherein a recess (22) in the clamping plate (20) comprises a slot (22) extending radially from the outer edge in the direction of the centre of the clamping plate (20).

8. The adapter (1) according to claim 6 or 7, wherein a recess (34) in the cover plate (30), on a side of the cover plate (30) facing toward the clamping plate (20) mounted in the state intended, comprises a groove (34) extending radially from the outer edge in the direction of the centre of the cover plate (30).

9. The adapter (1) according to one of the preceding claims, wherein the coupling element (11), preferably the coupling pin (11), comprises a latching element (15), preferably a latching notch (15).

10. The adapter (1) according to claim 9, wherein two latching notches (15) are arranged on two opposing sides in an outer surface of the coupling pin (11).

11. A table lamp (100) having an adapter (1) according to one of the preceding claims.

12. A use of an adapter (1) according to one of claims 1 to 10 for fastening an object (100), preferably a table lamp (100), in a vertical recess (A) of a table top (T).

## Revendications

1. Adaptateur (1) sous la forme d'un insert pour un évidement vertical (A) d'un plateau de table (T) pour la fixation d'un objet (100), de préférence d'une lampe de table (100), ledit adaptateur (1) comprenant au moins les composants suivants :
- un boulon de liasion (10) conçu pour s'étendre à travers l'évidement (A) du plateau de table (T) dans l'état monté,
lequel présente un élément d'accouplement (11) au niveau d'une première section d'extrémité (10a), de préférence un pivot d'accouplement (11), pour l'accouplement à l'objet (100) à fixer,
et lequel présente des moyens de fixation (16G) pour la fixation à une plaque de serrage (20) dans une deuxième section (10b) séparée de l'élément d'accouplement (11) par un col (12) s'étendant radialement vers l'extérieur avec une surface d'appui (13) tournée dans la direction vers la deuxième section (10b),
- une plaque de serrage (20) avec des moyens de fixation (21) pour la fixation sur la deuxième section (10b) du boulon de liaison (10) de façon réglable dans une direction longitudinale du boulon de liaison (10),
- facultativement, une plaque de couverture (30) disposée entre la plaque de serrage (20) et le col (12), avec une ouverture de passage (31) à travers laquelle s'étend la deuxième section (10b) du boulon de liaison (10),
**caractérisé en ce que** la plaque de serrage (20) présente un élément de centrage (24, 25) sur au moins une surface supérieure de la plaque de serrage (20), lequel est adapté à un diamètre intérieur de l'évidement (A) d'un plateau de table (T).

2. Adaptateur (1) selon la revendication 1, dans lequel les moyens de fixation (16G) sur le boulon de liaison (10) comportent un filet extérieur (16G) et les moyens de fixation (21) sur la plaque de serrage (20) comportent un trou taraudé (21) avec un filet intérieur correspondant au filet extérieur (16G) du boulon de liaison (10).

3. Adaptateur (1) selon l'une des revendications précédentes, dans lequel le boulon de liaison (10) est conçu au moins en deux parties, dans lequel une première partie comporte l'élément d'accouplement (11), de préférence avec le col (12) s'étendant radialement vers l'extérieur, et une deuxième partie reliée à la première partie comporte la deuxième section (10b).

4. Adaptateur (1) selon l'une des revendications précédentes, dans lequel les moyens de fixation (21) sur la plaque de serrage (20) et/ou l'ouverture de passage (31) dans la plaque de couverture facultative (30) sont disposés de telle façon que le boulon de liaison (10) est disposé de manière centrale sur la plaque de serrage (20) et/ou la plaque de couverture facultative (30).

5. Adaptateur (1) selon l'une des revendications précédentes, dans lequel, sur deux surfaces supérieures opposées, la plaque de serrage (20) présente des éléments de centrage (24, 25) pour des évidements (A) avec des diamètres intérieurs différents.

6. Adaptateur (1) selon l'une des revendications précédentes, dans lequel la plaque de serrage (20) et/ou la plaque de couverture facultative (30) présentent respectivement des évidements (22, 34) à une position située à côté des moyens de fixation (21) ou de l'ouverture de passage (31) pour le boulon de liaison (10).

7. Adaptateur (1) selon la revendication 6, dans lequel un évidement (22) dans la plaque de serrage (20) comporte une fente (22) s'étendant radialement à partir du bord extérieur vers le centre de la plaque de serrage (20).

8. Adaptateur (1) selon la revendication 6 ou 7, dans lequel un évidement (34) dans la plaque de couverture (30) comporte une rainure (34) s'étendant radialement à partir du bord extérieur vers le centre de la plaque de couverture (30), sur un côté de la plaque de couverture (30) tourné vers la plaque de serrage (20) dans l'état conformément monté.

9. Adaptateur (1) selon l'une des revendications précédentes, dans lequel l'élément d'accouplement (11), de préférence le pivot d'accouplement (11), présente un élément d'encliquetage (15), de préférence une encoche (15).

10. Adaptateur (1) selon la revendication 9, dans lequel deux encoches (15) sont disposées sur deux côtés opposés dans une surface d'enveloppe du pivot d'accouplement (11).

11. Lampe de table (100) avec un adaptateur (1) selon l'une des revendications précédentes.

12. Utilisation d'un adaptateur (1) selon l'une des revendications 1 à 10, pour la fixation d'un objet (100), de préférence d'une lampe de table (100), dans un évidement vertical (A) d'un plateau de table (T).
